# EUROPÄISCHE PATENTSCHRIFT

(11) **EP 1 762 111 B1**
(45) Veröffentlichungstag und Bekanntmachung des Hinweises auf die Patenterteilung: **02.12.2009**
(21) Anmeldenummer: 05752735.0
(22) Anmeldetag: 09.06.2005
(51) Int. Cl.: H04W 4/02, H04L 12/28

(54) **VERFAHREN UND ANORDNUNG ZUR ERMITTLUNG MINDESTENS EINES VORSCHLAGS ZUM STANDORTWECHSEL FÜR EINEN BENUTZER EINES MOBILEN ENDGERÄTS**
METHOD AND ARRANGEMENT FOR DETERMINING AT LEAST ONE SUGGESTION FOR CHANGING LOCATION FOR A USER OF A MOBILE TERMINAL
PROCEDE ET SYSTEME POUR DETERMINER UNE SUGGESTION DE CHANGEMENT D'EMPLACEMENT POUR UN UTILISATEUR D'UN TERMINAL MOBILE

(30) Priorität: 28.06.2004 DE 102004031132
(43) Veröffentlichungstag der Anmeldung: 14.03.2007
(73) Patentinhaber: SIEMENS AKTIENGESELLSCHAFT, 80333 München (DE)
(72) Erfinder: KLEIN, Cornel, 82041 Oberhaching (DE)
(74) Vertreter: Fritzsche, Thomas
(86) Internationale Anmeldenummer: PCT/EP2005/052659
(87) Internationale Veröffentlichungsnummer: WO 2006/000528

(56) Entgegenhaltungen:
- EP-A- 1 014 742
- WO-A-02/39759
- GB-A- 2 389 005

## Beschreibung

Die Erfindung betrifft ein Verfahren und Anordnung, bei dem, durch eine günstige Standortwahl mit besserer Netzanbindung bzw. durch einen ggf. damit verbundenen Standortwechsel eines Benutzer eines mobilen Endgeräts, eine effizientere und/oder kostengünstigere Nutzung von Netzdiensten ermöglicht wird.

Ein so genannter Handover zwischen unterschiedlichen Netzen oder Netzteilen erfolgt bislang spontan, z.B. nach Signalstärke, oder auf Veranlassung eines Benutzers.

Das Dokument WO 02/39759 A offenbart ein Verfahren zur Ermittlung mindestens eines Vorschlags zum Standortwechsel für einen Benutzer eines mobilen Endgeräts, bei dem in Abhängigkeit von einem jeweiligen aktuellen Benutzerstandort von Kommunikationsanforderungen mindestens einer jeweiligen Anwendung und von verfügbaren Netzdiensten in der Umgebung des aktuellen Benutzerstandorts mindestens ein günstiger Benutzerstandort in der Umgebung eines jeweiligen aktuellen Benutzerstandorts für ein mobiles Endgerät als Vorschlag zum Standortwechsel ermittelt wird, wobei in günstigsten Standorten Netzdienste effizienter und/oder kostengünstiger nutzbar sind.

Die der Erfindung zu Grunde liegende Aufgabe besteht nun darin ein Verfahren und eine Anordnung zur Ermittlung mindestens eines Vorschlags zum Standortwechsel für einen Benutzer eines mobilen Endgeräts derart anzugeben, dass hiermit eine effizientere und/oder kostengünstigere Nutzung von Netzdiensten ermöglicht wird.

Die Aufgabe wird hinsichtlich des Verfahrens durch die Merkmale des Anspruchs 1 und hinsichtlich der Vorrichtung durch die Merkmale des Anspruchs 12 erfindungsgemäß gelöst. Die weiteren Ansprüche betreffen vorteilhafte Ausgestaltungen des erfindungsgemäßen Verfahrens und der erfindungsgemäßen Vorrichtung.

Die Erfindung besteht im Wesentlichen darin, dass in Abhängigkeit von einem jeweiligen aktuellen Benutzerstandort, von Kommunikationsanforderungen mindestens einer jeweiligen Anwendung und von verfügbaren Netzdiensten in der Umgebung des aktuellen Benutzerstandorts mindestens ein günstiger Benutzerstandort in der Umgebung eines jeweiligen aktuellen Benutzerstandorts für ein mobiles Endgerät als Vorschlag zum Standortwechsel ermittelt wird, wobei in günstigen Standorten Netzdienste effizienter und/oder kostengünstiger nutzbar sind.

Die Erfindung wird nachfolgend anhand eines in Zeichnung dargestellten Ausführungsbeispiels näher erläutert.

Ein mobiles Endgerät **M** stellt durch eingebaute Verfahren oder durch Dienste eines Mobilfunknetzes der Anwendung **App** eine Implementierung folgender Einheiten bzw. Schnittstellen zur Verfügung:
- Eine Einheit bzw. Schnittstelle **User,** um den Benutzer des Endgeräts über einen vorgeschlagenen Standortwechsel zu Informieren, beispielsweise über das Display des Endgeräts.
- Eine Einheit bzw. Schnittstelle **Handover,** mit dem ein Handover der u.g. Einheit bzw. Schnittstelle **Data** zu einem anderen Mobilfunknetz, z.B. von GSM zu WLAN, eingeleitet werden kann oder mit dem das Endgerät M eine Anwendung über einen solchen Handover informieren kann.
- Eine Einheit bzw. Schnittstelle **Data,** mit der die Anwendung Daten mit bspw. dem Internet austauschen kann.
- Eine Einheit bzw. Schnittstelle **Pos,** mit der die Anwendung die aktuelle geographische Position des Endgeräts bestimmen kann.
- Eine Einheit bzw. Schnittstelle **NetCaps,** mit der die Anwendung die Eigenschaften der derzeit über das Endgerät **M** erreichbaren mobilen Netze abfragen kann, beispielsweise deren Bandbreite, Kosten oder Quality of Service-Eigenschaften.
- Eine Einheit bzw. Schnittstelle **NetServices,** mit der die Anwendung, abhängig von der aktuellen Position des Benutzers, die in der Umgebung verfügbaren mobilen Netzdienste, bspw. GSM, UMTS, WLAN, LAN, Bluetooth, lokal oder von einem Server abfragen kann, Standortinformationen über diese Dienste sowie die Fähigkeiten dieser Netzdienste.

Die genannten Funktionalität der genannten Schnittstellen kann hierbei lokal auf dem Endgerät oder in einer verteilten Architektur auf mehreren Endgeräten des Benutzers und/oder entsprechenden Komponenten (Servern) im Netz realisiert werden.

Möchte nun die Anwendung **App** einen Datentransfer durchführen, so führt sie folgende Schritte durch:
1. Die Anwendung **App** überprüft über die Einheit bzw. Schnittstelle **NetCaps,** ob die Eigenschaften eines am aktuellen Standort verfügbaren Netzes ausreichen, um den Datentransfer durchzuführen. Ggf. führt Anwendung **App** über die Einheit bzw. Schnittstelle **User** eine Rückfrage beim Benutzer durch, beispielsweise wenn der entsprechende Datentransfer am aktuellen Standort zwar möglich, aber sehr teuer wäre.
2. Ist ein Standortwechsel nötig oder gewünscht, so fragt die Anwendung **App** über die Einheit bzw. Schnittstelle **Pos** die aktuelle Position des Endgeräts ab, und führt dann die folgenden Schritte 3..8 durch; ansonsten direkt weiter mit Schritt 6.
3. Über Einheit bzw. Schnittstelle **NetServices** fragt die Anwendung **App** die in der Umgebung möglichen Netzdienste ab und bestimmt abhängig von den Anforderungen an den Datentransfer, möglicher Präferenzen des Benutzers usw. einen oder mehrere Standorte, die dem Benutzer als neuer Standort vorgeschlagen werden.
4. Die Anwendung **App** gibt über die Einheit bzw. Schnittstelle **User** diese Standorte aus und schlägt dem Benutzer vor, beispielsweise einen WLAN Hotspot anzufahren.
5. Sobald der Benutzer diesen oder einen anderen geeigneten Standort erreicht hat, erkennt die Anwendung **App** dies an der über die Einheit bzw. Schnittstelle Pos gelieferten Standortinformation und/oder an den über die Einheit bzw. Schnittstelle **NetCaps** verfügbaren Diensten.
6. Die Anwendung **App** leitet über die Einheit bzw. Schnittstelle **Handover** einen Handover in das am neuen Standort verfügbaren Mobilfunknetz mit den gewünschten Eigenschaften ein oder wird von der Einheit bzw. Schnittstelle **Handover** darüber informiert, dass ein solcher Handover durch ein eingebautes Verfahren des Endgeräts bereits stattgefunden hat.
7. Die Anwendung **App** führt über die Einheit bzw. Schnittstelle **Data** einen Datentransfer durch.
8. Die Anwendung **App** informiert nach Beendigung des Datentransfers den Benutzer über die Einheit bzw. Schnittstelle **User,** das der Standort verlassen werden kann, und veranlasst ggf. über die Einheit bzw. Schnittstelle Handover einen entsprechenden Wechsel des Netzes.

Im folgenden werden noch besonders vorteilhafte Ausgestaltung der Erfindung angegeben:

Das genannte Verfahren wird nicht von den einzelnen Anwendungen durchgeführt, sondern von einer neuen Komponente **CapManager.** Die Komponente **CapManager** sammelt die Anforderungen aller Anwendungen bzgl. Datentransfers, führt das o.g. Verfahren durch und informiert die Anwendung wenn ein Netzdienst mit den geforderten Fähigkeiten verfügbar ist.

Die Anforderungen bzgl. Übertragungskapazität werden nicht von der Anwendung **App** selbst, sondern vom mobilen Endgerät bestimmt, beispielsweise aufgrund der verwendeten Protokolle, der Anzahl der ausgetauschten Bytes oder weiterer aus den spezifischen Protokollen und ausgetauschten Nachrichten abgeleiteten Informationen. Erkennt das Endgerät, dass ggf. ein größerer Datentransfer durchgeführt werden soll, so führt es selbstständig das o.g. Verfahren durch und hält ggf. solange die entsprechenden Anwendungen an.

Das o.g. Verfahren wird mit einem Routenplaner oder Fahrzeugnavigationssystem integriert. Hierdurch kann die geplante Route im Schritt 3 berücksichtigt werden. Ebenso verfügt Navigationssystem oft über Möglichkeiten zur Standortbestimmung und kann damit auch die o.g. Einheit bzw. Schnittstelle **Pos** implementieren kann. Ebenso kann über das Fahrzeugnavigationssystem die Kommunikation mit dem Benutzer bspw. über die Einheit bzw. Schnittstelle **User** erfolgen.

Die Einheit bzw. Schnittstelle **NetServices** wird in der Regel über zentrale Verzeichnisse realisiert werden. Darüber hinaus kann ein solches Verzeichnis im mobilen Endgerät selbst geführt werden. In dieses Verzeichnis werden stets Informationen über Standorte, Dienste und deren Charakteristika eingetragen, so dass im Laufe der Zeit Informationen über Standorte gesammelt werden, in denen sich der Benutzer häufig aufhält.

Das Verfahren wird so implementiert, dass es auch im "offline-Betrieb" arbeiten kann. Hierbei werden die benötigten Verzeichnisse im Endgerät gehalten und das Endgerät informiert dann auch ohne Netzverbindung seinen Nutzer beispielsweise über den nächsten WLAN Hotspot.

Die Anwendung App wird auf einem Server im Netz durchgeführt und informiert das Endgerät durch eine entsprechende Nachricht, z.B. durch eine SMS, von einem anstehenden Datentransfer.

Anstelle einer genauen geographischen Position wird aufgrund von Eigenschaften des aktuell verwendeten Datennetzes die Position grob bestimmt, beispielsweise aufgrund einer GSM Zellenkennung, einer Subnetzmaske des IP-Netzes oder auf Basis einer MAC-Adresse oder einer Netzkennung eines WLAN-Accesspoints.

Eine weitere Möglichkeit ist ein "Peer to Peer"-Ansatz, in dem Informationen über Standorte, Dienste und deren Charakteristika direkt oder über bspw. einen Server zwischen mobilen Endgeräten ausgetauscht werden.

Die hier aufgeführten Beispiele fokussieren sich auf Wireless LAN, die genannten Verfahren können jedoch durchaus dazu verwendet werden, einen Benutzer beispielsweise auch in eine UMTS-Zelle mit größerer Bandbreite zu führen. Hierbei können nicht nur Anforderungen des Endbenutzers, sondern auch Anforderungen des Netzbetreibers in das Verfahren mit einfließen. Beispielsweise kann es für einen Netzbetreiber sinnvoll sein, durch geeignete Kostenmodelle einen Endbenutzer in eine Netzzelle mit geringerer Auslastung zu führen.

Die genannte Erfindung kann beispielsweise mit einem PocketPC, welcher über einen eingebauten Email-Client, eine GRPS-Verbindung, ein GPS System und eine WLAN-Karte verfügt, realisiert werden.

Der Email-Client kommuniziert mit einem Email-Server im Netz und kann von diesen die Größe einer zu ladenden Email abfragen. Übersteigt die Größe der Email einen gewissen Schwellwert, so fragt der Email-Client die Position über das GPS System ab und stellt über GPRS eine Anfrage an einen Server im Netz, welcher eine Liste der WLAN Access Points in näheren Umgebung des Endgeräts zurückliefert. Diese Liste wird vom Email Client dem Benutzer vorgeschlagen. Der Benutzer kann nun entscheiden, ob er mit dem Download sofort - bspw. mit höheren Kosten - beginnen will oder ob er sich an einen Standort mit WLAN Access begeben will. Sobald der WLAN Access hergestellt ist, erkennt dies der Email-Client und beginnt mit der Übertragung der Email.

Ein typisches Anwendungsbeispiel der Erfindung ist ein mobiler Nutzer, welcher mit seinen Auto und einem Navigationssystem unterwegs ist. Eine Anwendung im Kommunikationssystem des Fahrzeugs kann in einen Zustand geraten, in dem die Übertragung einer größeren Datenmenge sinnvoll ist, z.B. der Download einer großen Email mit Attachements. Ein solcher Download ist über typische Mobilfunknetze wie GSM aber auch UMTS oft nur relativ langsam und/oder unter hohen Kosten möglich.

Das Kommunikationssystem kann nun über das Navigationssystem dem Fahrer des Fahrzeugs vorschlagen, einen Standort anzufahren oder seine Route entsprechend zu ändern - er muß am Standort nicht unbedingt "halten", an dem ein schneller und kostengünstiger Download über Wireless LAN (WLAN) möglich ist. Nachdem der Fahrer einen derartigen "Hotspot" angefahren hat, ist ein schneller und kostengünstiger Download der Email möglich.

In diesen Zusammenhang ist anzumerken, das von einem raschen Wachstum öffentlich zugänglicher WLAN "Hotspots" auszugeben ist. Beispielsweise gibt es seitens der Deutschen Telekom Überlegungen, öffentliche Telefonzellen mit WLAN Access Points auszustatten.

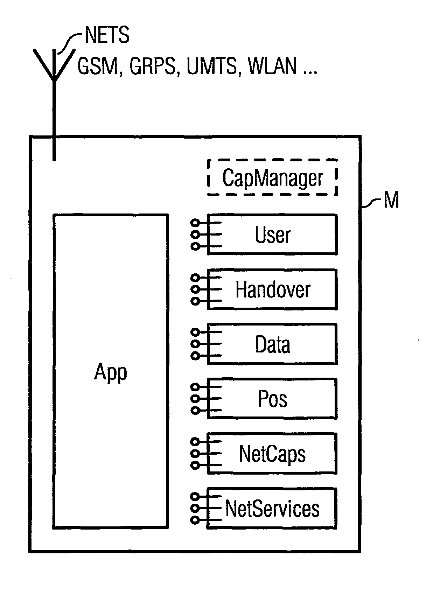

## Patentansprüche

1. Verfahren zur Ermittlung mindestens eines Vorschlags zum Standortwechsel für einen Benutzer eines mobilen Endgeräts (M),
bei dem in Abhängigkeit von einem jeweiligen aktuellen Benutzerstandort, von Kommunikationsanforderungen mindestens einer jeweiligen Anwendung und von verfügbaren Netzdiensten in der Umgebung des aktuellen Benutzerstandorts mindestens ein günstiger Benutzerstandort in der Umgebung eines jeweiligen aktuellen Benutzerstandorts für ein mobiles Endgerät als Vorschlag zum Standortwechsel ermittelt wird, wobei in günstigen Standorten Netzdienste effizienter und/oder kostengünstiger nutzbar sind,
**dadurch gekennzeichnet,**
**dass** die verfügbaren Netzdienste aus einem Verzeichnis des mobilen Endgeräts abgefragt werden, das Informationen mit entsprechenden Verzeichnissen anderer mobiler Endgeräte im Umfeld des jeweiligen Benutzers austauscht oder abgleicht.

2. Verfahren nach Anspruch 1,
bei dem günstige Standorte derart ermittelt werden,
dass gewünschte Anforderungen und Dienstangebote bzgl. Qualität, Kosten und
Verfügbarkeit gewichtet und optimiert werden.

3. Verfahren nach Anspruch 1 oder 2, bei dem
a) überprüft wird, ob die Eigenschaften eines am aktuellen Standort verfügbaren Netzes ausreichen, um einen Datentransfer zu gewünschten Bedingungen durchzuführen,
b) die aktuelle Position des Endgeräts abfragt wird und dann die Schritte c) bis f) durchführt werden, sofern ein Standortwechsel nötig oder gewünscht wird, und ansonsten direkt zu Schritt e) übergegangen wird,
c) die in der gegenwärtigen oder entsprechend des Routenplans geplanten zukünftigen Umgebung möglichen Netzdienste abfragt und bestimmt werden sowie mindestens abhängig von den Anforderungen an den Datentransfer und/oder möglicher Präferenzen des Benutzers mindestens einen günstigen Standort ermittelt und dem Benutzer als neuer Standort vorgeschlagen werden,
d) einer des mindestens einen günstigen Benutzerstandorts durch die gelieferte Standortinformation und/oder durch die hier verfügbaren Diensten erkannt wird, sobald der Benutzer diesen günstigen Standort erreicht hat,
e) ein Handover in das am neuen Standort verfügbare Mobilfunknetz mit den gewünschten Eigenschaften einleitet wird, sofern der Handover noch nicht anderweitig bereits stattgefunden hat oder nicht notwendig ist,
f) ein Datentransfer durchführt und der Benutzer über Beginn und/oder Ablauf und/oder Ende des Datentransfers informiert wird.

4. Verfahren nach Anspruch 3,
bei dem eine Rückfrage beim Benutzer durchgeführt wird, wenn der entsprechende Datentransfer am aktuellen Standort zwar möglich, aber sehr teuer wäre.

5. Verfahren nach Anspruch 3 oder 4,
bei dem der Benutzer nach Beendigung des Datentransfers darüber informiert wird, dass der Standort verlassen werden kann, und wenn notwendig über Handover ein entsprechender Wechsel des Netzes veranlasst wird.

6. Verfahren nach einem der Ansprüche 1 bis 5,
bei dem der aktuelle Benutzerstandort aufgrund einer Zellenkennung im Netz, einer Subnetzmaske des IP-Netzes oder auf Basis einer MAC-Adresse oder einer Netzkennung eines WLAN-Accesspoints grob bestimmt wird.

7. Verfahren nach einem der Ansprüche 1 bis 5,
bei dem der aktuelle Benutzerstandort manuell eingegeben oder von einem externen System importiert wird.

8. Verfahren nach einem der Ansprüche 1 bis 7,
bei dem die verfügbaren Netzdienste aus einem Verzeichnis abgefragt werden, das im mobilen Endgerät selbst oder in einem anderen mit diesem lokal verbundenen Endgerät geführt wird, wobei dort Informationen über neue besuchte Standorte, Dienste und deren Charakteristika eingetragen werden.

9. Verfahren nach einem der vorhergehenden Ansprüche,
bei dem Anforderungen bzgl. Übertragungskapazität vom mobilen Endgerät aufgrund der verwendeten Protokolle, der Anzahl der ausgetauschten Bytes und/oder weiterer aus den spezifischen Protokollen und ausgetauschten Nachrichten abgeleiteten Informationen bestimmt werden.

10. Verfahren nach einem der vorhergehenden Ansprüche, bei dem ein vorgeschlagener günstiger Standort ein WLAN-Hotspot ist.

11. Vorrichtung zur Ermittlung mindestens eines Vorschlags zum Standortwechsel für einen Benutzer eines mobilen Endgeräts (M), mit mindestens einer Anwendung (App) derart, dass in Abhängigkeit von einem jeweiligen aktuellen Benutzerstandort, von Kommunikationsanforderungen mindestens einer jeweiligen Anwendung und von verfügbaren Netzdiensten in der Umgebung des aktuellen Benutzerstandorts mindestens ein günstiger Benutzerstandort in der Umgebung eines jeweiligen aktuellen Benutzerstandorts für ein mobiles Endgerät als Vorschlag zum Standortwechsel ermittelt wird, wobei in günstigen Standorten Netzdienste effizienter und/oder kostengünstiger nutzbar sind,
**dadurch gekennzeichnet,**
**dass** das Endgerät derart ausgebildet ist, dass es selbstständig, im Falle eines bevorstehenden umfangreichen Datentransfers, die Ermittlung mindestens eines Vorschlags zum Standortwechsel für einen Benutzer durchführt und die entsprechenden Anwendungen solange anhält, bis einer vorgeschlagenen Standorte erreicht ist.

12. Vorrichtung nach Anspruch 11,
mit mindestens einer Anwendung (App), die Schnittstellen zu folgenden Einheiten aufweist:
a) zu einer Einheit zur Benutzerinformation (User) derart, dass der Benutzer des Endgeräts über einen vorgeschlagenen Standortwechsel informierbar ist,
c) zu einer Einheit zum Datenaustausch (Data) derart, dass Daten mit einem Netz austauschbar sind,
d) zu einer Einheit zum Handover (Handover) derart, dass ein Handover der Einheit zum Datenaustausch zu einem anderen Netz einleitbar und die mindestens eine Anwendung über einen solchen Handover zu informierbar ist,
e) zu einer Einheit zur Positionsermittlung (Pos) derart, dass von der mindestens einen Anwendung die aktuelle geographische Position des Endgeräts bestimmbar ist,
f) zu einer Einheit zur Ermittlung der Netzmöglichkeiten (NetCaps) derart, dass von der mindestens einen Anwendung die Eigenschaften der derzeit erreichbaren Netze abfragbar sind und
g) zu einer Einheit zur Ermittlung der lokal möglichen Netzdienste (NetServices) derart, dass von der mindestens einen Anwendung abhängig von der aktuellen Position die in der Umgebung verfügbaren mobilen Netzdienste und jeweilige Eigenschaften dieser Netzdienste abfragbar sind.

13. Vorrichtung nach Anspruch 12,
bei der eine Einheit zur Anforderungskoordination (CapManager) derart vorhanden ist, dass die Anforderungen bezüglich Datentransfers aller Anwendungen (App) gesammelt werden und die Ermittlung des mindestens einen Vorschlags zum Standortwechsel an Stelle von der mindestens einen Anwendung von dieser Einheit zur Anforderungskoordination übernommen wird und die mindestens eine Anwendung informiert wird, wenn ein Netzdienst mit den geforderten Fähigkeiten verfügbar ist.

## Claims

1. Method for determining at least one suggestion for a change of location for a user of a mobile terminal (M), where, in dependence on a respective current user location, on communication requests of at least one respective application and on available network services in the vicinity of the current user location, at least one favourable user location in the vicinity of a respective current user location for a mobile terminal is determined as a suggestion for a change of location, wherein network services are useable more efficiently and/or more cost-effectively in favourable locations, **characterized in that** the available network services are requested from a directory of the mobile terminal that exchanges or synchronizes information with corresponding directories of other mobile terminals in the vicinity of the respective user.

2. Method according to Claim 1, where favourable locations are determined in such a manner that desired requests and service provisions are weighted and optimised with regard to quality, costs and availability.

3. Method according to Claim 1 or 2, where
a) a check is performed as to whether the characteristics of a network available at the current location are sufficient to carry out a data transfer under the desired conditions,
b) the current position of the terminal is requested and then, if a change of location is necessary or desired, steps c) to f) are carried out, if this is not the case, step e) follows directly,
c) the possible network services in the present vicinity or in the future vicinity planned according to a route plan are requested and determined and at least one favourable location is determined and suggested to the user as a new location, at least in dependence on the requests for the data transfer and/or possible preferences of the user,
d) one of the at least one favourable user location is recognized through the supplied location data information and/or through the services available here as soon as the user has obtained said favourable location,
e) a handover into the mobile radio network available at the new location with the desired characteristics is introduced if the handover has not yet already taken place in another manner or is not necessary,
f) a data transfer is carried out and the user is informed about the start and/or sequence and/or end of the data transfer.

4. Method according to Claim 3, where a confirmation is requested from the user if the corresponding data transfer is possible at the current location but would be very expensive.

5. Method according to Claim 3 or 4, where, after completion of the data transfer, the user is informed that the location can be left, and if necessary a corresponding change of network is brought about via handover.

6. Method according to one of Claims 1 to 5, where the current user location is determined in a rough manner on account of a cell identification in the network, a subnet mask of the IP network or on the basis of a MAC address or a network identification of a WLAN access point.

7. Method according to one of Claims 1 to 5, where the current user location is input manually or is imported from an external system.

8. Method according to one of Claims 1 to 7, where the available network services are requested from a directory that is maintained in the mobile terminal itself or in another terminal connected locally to said mobile terminal, wherein information on newly visited locations, services and their characteristics is recorded there.

9. Method according to one of the preceding Claims, where requests with regard to transmission capacity of the mobile terminal are determined in view of the protocols used, the number of bytes exchanged and/or additional information derived from the specific protocols and exchanged messages.

10. Method according to one of the preceding Claims, where a suggested favourable location is a WLAN hotspot.

11. Device for determining at least one suggestion for a change of location for a user of a mobile terminal (M), with at least one application (App) in such a manner that in dependence on a respective current user location, on communication requests of at least one respective application and on available network services in the vicinity of the current user location, at least one favourable user location in the vicinity of a respective current user location for a mobile terminal is determined as a suggestion for a change of location, wherein network services are useable in a more efficient and/or in a more cost-effective manner in favourable locations, **characterized in that** the terminal is realized in such a manner that, in the event of an imminent substantial data transfer, it carries out, in an independent manner, the determining of at least one suggestion for a change of location for a user and maintains the corresponding applications just until a suggested location has been obtained.

12. Device according to Claim 11, with at least one application (App) that has interfaces to the following units:
a) to a unit for user information (User) in such a manner that the user of the terminal is informable about a suggested change or location,
c) to a unit for data exchange (Data) in such a manner that data is exchangeable with a network,
d) to a unit for handover (Handover) in such a manner that a handover of the unit for data exchange to another network is initiatable and the at least one application is informable about such a handover,
e) to a unit for position determining (Pos) in such a manner that the current geographic position of the terminal is determinable by the at least one application,
f) to a unit for determining the network capabilities (NetCaps) in such a manner that the characteristics of the currently obtainable networks are requestable by the at least one application,
g) to a unit for determining the network services possible locally (NetServices) in such a manner that the mobile network services available in the vicinity and respective characteristics of said network services are requestable by the at least one application in dependence on the current position.

13. Device according to Claim 12, where there is provided a unit for request coordination (CapManager) in such a manner that the requests with reference to data transfers of all applications (App) are collected and the determining of the at least one suggestion for a change of location is undertaken by the said unit for request coordination in place of the at least one application and the at least one application is informed when a network service with the required capabilities is available.

## Revendications

1. Procédé pour déterminer au moins une suggestion de changement d'emplacement pour un utilisateur d'un terminal mobile (M),
dans le cadre duquel, en fonction d'un emplacement utilisateur respectif actuel, des exigences de communication d'au moins une application et des services de réseau disponibles dans l'environnement de l'emplacement utilisateur actuel, au moins un emplacement utilisateur avantageux dans l'environnement d'un emplacement utilisateur respectif actuel pour un terminal mobile est déterminé en tant que suggestion de changement d'emplacement, les services de réseau pouvant être utilisés de manière plus efficace et/ou à meilleur marché,
**caractérisé en ce que**
les services de réseau disponibles sont interrogés à partir d'un répertoire du terminal mobile qui échange ou compare les informations avec des répertoires correspondants d'autres terminaux mobiles dans l'environnement de l'utilisateur respectif.

2. Procédé selon la revendication 1,
dans le cadre duquel des emplacements avantageux sont déterminés de manière à ce que les exigences et les offres de services souhaitées en termes de qualité, de coûts et de disponibilités soient pondérées et optimisées.

3. Procédé selon les revendications 1 ou 2,
dans le cadre duquel
a) il est vérifié que les caractéristiques d'un réseau disponible dans l'emplacement actuel soient suffisantes pour exécuter un transfert de données aux conditions souhaitées,
b) la position actuelle du terminal est interrogée et les étapes c) à f) sont ensuite effectuées, dès lors qu'un changement d'emplacement est nécessaire ou souhaité, et sinon, il est procédé directement à l'étape e),
c) Les services de réseau se trouvant dans l'environnement actuel ou l'environnement futur prévu selon l'itinéraire sont interrogés et déterminés, de même, au moins un emplacement avantageux est déterminé au moins en fonction des exigences de transfert de données et/ou des préférences possibles de l'utilisateur et est suggéré en tant que nouvel emplacement,
d) un du au moins un emplacement utilisateur avantageux est reconnu par le biais des informations d'emplacement fournies et/ou par le biais des services qui y sont disponibles, dès que l'utilisateur atteint cet emplacement avantageux,
e) un transfert sur le réseau de téléphonie mobile disponible dans le nouvel emplacement est déclenché, dès lors que le transfert n'a pas eu lieu d'une autre manière ou qu'il n'est pas nécessaire,
f) un transfert de données est exécuté et l'utilisateur est informé du début et/ou du déroulement et/ou de la fin du transfert de données.

4. Procédé selon la revendication 3,
dans le cadre duquel un rappel est effectué auprès de l'utilisateur si le transfert des données en question sur l'emplacement actuel est certes possible, mais coûterait très cher.

5. Procédé selon les revendications 3 ou 4,
dans le cadre duquel, après que le transfert de données est terminé, l'utilisateur est informé qu'il peut quitter l'emplacement et si nécessaire un changement de réseau peut être engagé par transfert.

6. Procédé selon l'une des revendications 1 à 6,
dans le cadre duquel l'emplacement utilisateur actuel est déterminé grossièrement à partir d'une identification de cellules dans le réseau, d'un masque de sous-réseau du réseau IP ou à partir d'une adresse MAC ou d'une identification de réseau d'un point d'accès de réseau sans fil.

7. Procédé selon l'une des revendications 1 à 5,
dans le cadre duquel l'emplacement utilisateur actuel est saisi manuellement ou est importé d'un système externe.

8. Procédé selon l'une des revendications 1 à 7,
dans le cadre duquel les services de réseau disponibles sont interrogés à partir d'un répertoire qui est introduit dans le terminal mobile lui-même ou un autre terminal relié localement avec celui-ci, dans lequel des informations sur le nouvel emplacement visité, les services et ses caractéristiques sont entrées.

9. Procédé selon l'une quelconque des revendications précédentes,
dans le cadre duquel les exigences concernant la capacité de transmission du terminal mobile sont déterminées à partir des protocoles utilisés, du nombre d'octets échangés et/ou d'autres informations émanant des protocoles spécifiques et de messages échangés.

10. Procédé selon l'une quelconque des revendications précédentes, dans lequel un emplacement plus avantageux suggéré est un point d'accès sans fil.

11. Dispositif pour déterminer au moins une suggestion de changement d'emplacement pour un utilisateur d'un terminal mobile (M), comprenant au moins une application (App) de sorte que, en fonction de l'emplacement utilisateur respectif actuel, à partir des exigences de communication d'au moins une application respective et des services de réseau disponibles dans l'environnement de l'emplacement utilisateur actuel, au moins un emplacement utilisateur plus avantageux dans l'environnement d'un emplacement utilisateur respectif actuel pour un terminal mobile est déterminé en tant que suggestion de changement d'emplacement, les services de réseau dans des emplacement avantageux pouvant être utilisés de manière plus efficaces et/ou à moindres coûts,
**caractérisé en ce que**
le terminal est conçu de manière à effectuer, en cas d'un transfert de données important imminent, la détermination d'au moins une suggestion de changement d'emplacement pour un utilisateur et arrête les applications correspondantes jusqu'à ce qu'un emplacement suggéré soit atteint.

12. Dispositif selon la revendication 11,
comprenant au moins une application (App) qui présente des interfaces vers les unités suivantes :
a) vers une unité d'informations utilisateur (User), de sorte que l'utilisateur du terminal est informé d'un changement d'emplacement suggéré,
c) vers une unité d'échange de données (Data), de sorte que les données puissent être échangées avec un réseau,
d) vers une unité de transfert (Handover), de sorte qu'un transfert de l'unité d'échange de données puisse être engagé vers un autre réseau et qu'au moins une application puisse être informée dudit transfert,
e) vers une unité de détermination d'emplacement (Pos), de sorte que l'emplacement géographique actuel puisse être déterminé par au moins une application,
f) vers une unité de détermination des possibilités de réseau (NetCaps), de sorte que les propriétés de réseau actuellement accessibles puissent être interrogées par au moins une application et
g) vers une unité de détermination des services de réseau localement possibles (NetServices), de sorte que, en fonction du positionnement actuel, les services de réseau mobile disponibles dans l'environnement et les caractéristiques de ces services de réseau puissent être interrogés par au moins une application.

13. Dispositif selon la revendication 12,
dans le cadre duquel est présente une unité de coordination des exigences de manière à ce que les exigences concernant le transfert de données de toutes les applications (App) soient regroupées et que la détermination de la au moins une suggestion de changement d'emplacement soit reprise à la place de la au moins une application par cette unité de coordination des exigences et que la au moins une application soit informée lorsqu'un service de réseau présentant les capacités exigées est disponible.
